# EUROPÄISCHE PATENTSCHRIFT

(11) **EP 0 427 941 B1**
(45) Veröffentlichungstag und Bekanntmachung des Hinweises auf die Patenterteilung: **27.10.1993**
(21) Anmeldenummer: 90118658.5
(22) Anmeldetag: 28.09.1990
(51) Int. Cl.: B64G 1/62

(54) **Vorrichtung für den Rücktransport von kleinen Lasten aus dem Orbit**
Device for return of small loads from out of orbit
Dispositif pour le retour de petites charges d'un orbite

(30) Priorität: 14.10.1989 DE 3934346
(43) Veröffentlichungstag der Anmeldung: 22.05.1991
(73) Patentinhaber: ERNO Raumfahrttechnik Gesellschaft mit beschränkter Haftung, D-28199 Bremen (DE)
(72) Erfinder: Retat, Ingo, Dr., D-2807 Achim (DE)

(56) Entgegenhaltungen:
- US-A- 3 118 636
- US-A- 3 286 951
- US-A- 3 433 435
- US-A- 4 504 031
- PATENT ABSTRACTS OF JAPAN, Band 10, Nr. 175 (E-413), 20. Juni 1986;& JP-A-61 24 305 (HITACHI SEISAKUSHO K.K.) 03-02-1986

## Beschreibung

Die Erfindung betrifft eine Vorrichtung für den Rücktransport von kleinen Nutzlasten aus dem Orbit, die im wesentlichen als ein passiver Widereintrittskörper ausgebildet ist, der eine Fallbremseinrichtung aufweist, die aus einem kompakten raumarmen Zustand in eine großflächige leichtgewichtige Kapselform mit einem niedrigen ballistischen Faktor (B) bingbar ist, wobei die Fallbremseinrichtung als ein Hitzeschutz ausgebildet ist.

Bezweckt wird die Beschaffung einer kostengünstigen Lösung für den Wiedereintritt von sehr kleinen Nutzlasten mit einem Gewicht von weniger als 100 kg aus dem nahen Erdorbit zur Erde.

Eine geeignete Transportvorrichtung ist für alle Raumfahrtmissionen von entscheidender Bedeutung. Hierbei geht es nicht nur um den Transport in den Weltraum, der mit Hilfe von Raketen oder einem Shuttle-System verwirklicht wird, sondern auch um die Durchführung einer passenden Rückkehrmöglichkeit aus dem Orbit. Geflügelte Wiedereintrittskörper, wie der Space-Shuttle, haben sich bereits erfolgreich für große Nutzlasten im Bereich von mehreren Tonnen bewährt. Für kleinere Nutzlasten in der Größenordnung von weniger als 100 kg sind immer noch Eintritts-Kapseln, wie beispielsweise die russische Soyuz-Kapsel üblich, die selbst noch ein Gesamtgewicht von mehreren Tonnen aufweist.

Im internationalen Raumfahrtbereich der 90er Jahre besteht ein Bedarf an einer kostengünstigen Vorrichtung, mit der kleine Nutzlasten in der Größenordnung von weniger als 100 kg aus dem nahen Erdorbit zurück zur Erde gebracht werden können. Zu denken ist beispielsweise an einen regelmäßigen wöchentlichen Transport von Experiment-Proben von einer Raumstation zur Erde zwecks Durchführung einer Analyse, wobei sehr kleine Nutzlasten in der Größenordnung von 10-20 kg zu transportieren sind.

Gerade bei kleinen Nutzlasten ist das Massenverhältnis Wiedereintrittskörper zu Nutzlast sehr ungünstig. Zudem werden durch das ungünstige Massenverhältnis die Startmassen und die damit verbunden Kosten sehr hoch, da die leeren Wiedereintrittskörper zunächst in den Orbit gebracht werden müssen.

Aus der US-A-3 286 951 ist ein aufblasbares aerodynamisches Bremssystem bekannt, mit dessen Hilfe Flugkörper oder Astronauten zur Erde zurückgebracht werden können. Zu einer Abbremsung eines Aufpralles auf den Erdboden ist ein spezieller aufblasbarer Luftsack vorgesehen. Das zurückzubringende Element oder der Astronaut wird im Kuppelbereich der schalenförmig entfalteten Vorrichtung angeordnet.

In der US-A-3 433 435 werden strukturelle und materialtechnische Details von Wiedereintrittskörpern beschrieben. Die Wiedereintrittskörper weisen jedoch keine spezielle entfaltbare Bremseinrichtung auf, sondern sind strukturell derart konstruiert, daß sie durch ihre Formgebung bei einem Eintritt in die Atmossphäre aufgrund des einwirkenden Luftwiderstandes abgebremst werden. Dies führt jedoch dazu, daß auftretende mechanische Belastungen sowie Wärmeeinwirkungen unmittelbar auf den Körper einwirken. Aufgrund einer beiläufig ebenfalls erwähnten Faltbarkeit ist es lediglich möglich, eine Konturänderung des Körpers selbst vorzunehmen. Konkrete Hinweise zur Realisierung der Faltbarkeit sind jedoch nicht enthalten.

Der Erfindung liegt demzufolge die Aufgabe zugrunde, eine kostengünstige herstellbare Vorrichtung für den Rücktransport von kleinen Nutzlasten aus dem Orbit mit geringer Masse verfügbar zu machen.

Erfindungsgemäß wird diese Aufgabe dadurch gelöst, daß die Form des Hitzeschildes durch Entfaltung herstellbar ist, daß für die Herstellung der Form des Hitzeschildes eine gefaltete Folienhohlform vorgesehen ist, die durch Ausschäumen zum fertigen Hitzeschild entfaltbar und stabil aushärtbar ist, daß die Folienhohlform zur Festigkeitserhöhung auf der Innenseite durch Ausschäumen eine faserverbundwerkstoffbildende Faser aufweist und daß für das Entfalten der Form des Hitzeschildes elastische Verstärkungselemente vorgesehen sind, die vor dem Entfalten um einen zentralen Abschnitt des Wiedereintrittskörpers gewickelt sind und beim Entfalten eine stabil ausschäumbare Folienhohlform aufspannen.

Bevorzugte Merkmale, die die Erfindung vorteilhaft weiterbilden, sind den nachgeordneten Patentansprüchen zu entnehmen.

Aufgrund der erfindungsgemäßen Ausgestaltung wird in vorteilhafter Weise ein spezielles Kapsel-Konzept vorgeschlagen, das bedingt durch Formgebung und Größe im wesentlichen nur aus einem Subsystem besteht. Eine Reduzierung der Zahl von Subsystemen bedeutet sowohl eine direkte Kosteneinsparung als auch, über die Massenreduzierung, eine Reduktion der Transportkosten in den Orbit.

In einfacher Weise ist der Wiedereintrittskörper als passiver Körper ausgebildet und weist nur ein Subsystem in Form einer Hitzeschutz- und Fallbremseinrichtung auf, wodurch die Vorteile eines Tether initiierten Wiedereintritts optimal genutzt werden. Das an sich bekannte Tether-System bewirkt im Prinzip eine Impuls-Änderung des Wiedereintrittskörpers, die sonst nur mit Hilfe eines Raketen-Motors (Retro-Motor) erreicht werden kann. Durch den Verzicht auf diesen Retro-Motor wird die Vorrichtung nicht nur einfacher, sondern auch sicherer, was unter anderem auch für Handhabung und Lagerung derartiger Vorrichtungen in Raumstationen von Bedeutung ist.

Das Tether-System ist bekannt und wird daher nur der Vollständigkeit halber angesprochen. Mit Hilfe eines Seils (Tether) kann ein Wiedereintrittskörper beispielsweise von einer Raumstation aus in Richtung Erde "abgeseilt" werden. Auf der Bahn, welche der Wiedereintrittskörper dann fliegt, ist die Erdanziehung größer als die Zentrifugalkraft, und der Wiedereintrittskörper wird nur durch das Seil auf dieser niedrigeren Bahn gehalten. Wird diese Verbindung getrennt, fliegt der Wiedereintrittskörper praktisch auf einer Ellipse bis zum "Rand" der irdischen Lufthülle. Danach erfolgt der Wiedereintritt mit einer passiven Ausrichtung des Wiedereintrittskörpers und schließlich dessen aerodynamische Abbremsung bis zur Landung.

Von zentraler Bedeutung für die erfindungsgemäße Vorrichtung ist die Hitzeschutz- und Fallbremseinrichtung des Wiedereintrittskörpers, die vorteilhaft in einer großflächigen leichtgewichtigen Hitzeschildkapselform mit einem niedrigen ballistischen Faktor ausgebildet ist. Das Vorsehen eines sehr niedrigen ballistischen Faktors B = m/(c_{w}*F), das heißt, Wiedereintrittskörper mit einem niedrigen Gewicht m und sehr großer Querschnittsfläche F bzw. hohem Widerstandsbeiwert c_{w}, ermöglicht in vorteilhafter Weise den sonst üblichen notwendigen Aufwand bei Hitzeschildern zur Aufnahme hoher thermischer und aerodynamischer Lasten. Der sehr niedrige ballistische Faktor führt zu einer starken Reduzierung der thermischen Belastung des Hitzeschildes, wobei gemäß der Erfindung ein wesentliches Merkmal darin besteht, den Hitzeschild so groß zu machen, daß er gleichzeitig eine fallschirmähnliche Wirkung erreicht, damit in Meereshöhe eine stabile Sinkgeschwindigkeit von ca. 10 m/s wie für Kapseln mit normalen Fallschirmen realisiert werden kann.

Nach der Ausgestaltung der Erfindung ist die Hitzeschildform durch Entfaltung herstellbar. Hierdurch wird für den Transport in den Orbit eine kompakte platzsparende Lösung erreicht.

Für das Herstellen des Hitzeschildes ist nach der Ausgestaltung der Erfindung eine gefaltete Folienform vorgesehen, die durch Ausschäumen zur fertigen Hitzeschildform entfaltbar und aushärtbar ist. Dabei ist es weiterhin günstig, wenn die Folienform zur Festigkeitserhöhung auf der Innenseite Fasern aufweist, um beim Ausschäumen einen Faserverbundwerkstoff herzustellen, der sich durch eine hohe Festigkeit auszeichnet.

Gemäß einer alternativen Weiterbildung der Erfindung ist der Hitzeschild selbstentfaltend mit Gedächtnis-Legierungen ausgebildet. Hierzu wird der Hitzeschild zunächst auf der Erde in seiner endgültigen Form aus einer sogenannten Gedächtnis-Legierung (Shape-Memory-Alloys) hergestellt und dann unterhalb einer (unteren) Martensitischen Umwandlungs-Temperatur Tᵤ abgekühlt, wobei eine Phasen-Umwandlung stattfindet. Danach wird der Hitzeschild passend gefaltet und die gesamte Vorrichtung in den Orbit gebracht. Bei dieser Faltung läuft die Verformung im wesentlichen über Zwillings-Bildung ab. Im Bereich der Raumstation kann der Hitzeschild dann durch Erwärmung über eine (obere) Martensit-Umwandlungstemperatur Tₒ wieder entfaltet werden. Die Verformungen werden dabei nahezu vollständig rückgängig gemacht. Durch die relativ niedrigen Temperaturen beim Wiedereintritt, die in der Größenordnung von etwa 800 °C liegen, ist es einfach, für den Hitzeschild geeignete Legierungen zu finden.

Für das Entfalten des Hitzeschildes sind elastische Verstärkungselemente, insbesondere in Form von sogenannten Stringern, vorgesehen, die vor dem Entfalten um einen zentralen Abschnitt des Wiedereintrittskörpers gewickelt sind und beim Entfalten eine ausschäumbare Folienhohlform aufspannen. Des weiteren ist es dabei hinsichtlich der Formstabilität vorteilhaft, wenn die elastischen Verstärkungselemente untereinander mit einem Fasergewebe verbunden sind, das beim Ausschäumen einen durch die Verstärkungselemente versteiften Faser-Verbundwerkstoff bildet.

Vorzugsweise weist der Hitzeschild zur Verbesserung der dynamischen Stabilität im Unterschall- und Transschallbereich Rotation erzeugende aerodynamische Elemente auf, die entweder aus Klappen am äußeren Rand des Hitzeschildes oder vorzugsweise als in den Hitzeschild eingearbeitete Formen gebildet sind.

Nachfolgend wird die Erfindung anhand von Zeichnungen näher erläutert. Es zeigen:
- Fig. 1: eine perspektivische Seitenansicht einer Ausgestaltung des Wiedereintrittskörpers mit großem kapselförmigen Hitzeschild;
- Fig. 2: ein Diagramm, das den Wärmefluß im Staupunktbereich für die in Fig. 1 gezeigte Vorrichtung während des Wiedereintritts darstellt;
- Fig. 3: ein Diagramm, das die aerodynamische Abbremsung der in Fig. 1 gezeigten Vorrichtung beim Wiedereintritt darstellt;
- Fig. 4: eine schematisierte Schnittansicht durch einen passiven Wiedereintrittskörper mit für den Transport zusammengefalteten Hitzeschild aus elastischen Verstärkungselementen, Folienhohlform und Schaumvorratsmeldern;
- Fig. 5: eine Draufsicht auf den in Fig. 4 gezeigten Wiedereintrittskörper, wobei die erste Phase der Entfaltungssequenz durch Abrollen der elastischen Verstärkungselemente dargestellt ist; und
- Fig. 6: eine perspektivische Seitenansicht des in Fig. 4 gezeigten Wiedereintrittskörpers mit vollständig entfalteten elastischen Verstärkungselementen und ausgeschäumter Folienhohlform zur Bildung des Hitzeschildes.

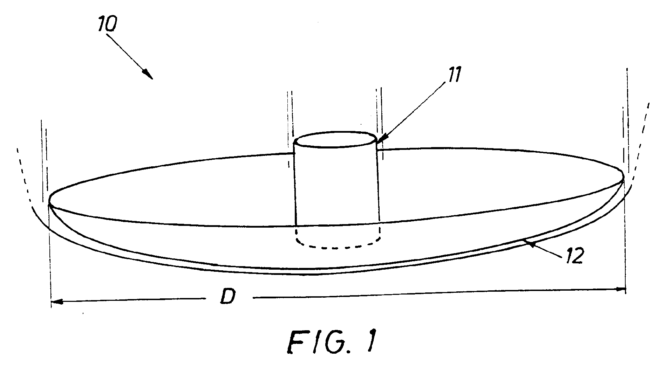

Das in Fig. 1 dargestellte Ausführungsbeispiel einer Vorrichtung 10 für den Transport von kleinen Nutzlasten aus dem Orbit weist eine pilzähnliche Form auf, bei der ein stielförmiger Wiedereintrittskörper 11 und eine Hitzeschutz-Fallbremseinrichtung 12 vorgesehen sind. Die Hitzeschutz- und Fallbremseinrichtung 12 besteht aus einem kappenförmigen großflächigen in Bewegungsrichtung des Wiedereintrittskörpers gewölbten Hitzeschild, der zur Erzielung einer fallschirmähnlichen Wirkung einen sehr niedrigen ballistischen Faktor aufweist.

Bei der als Ausführungsbeispiel in Fig. 1 dargestellten Vorrichtung 10 beträgt das Gesamtgewicht des Wiedereintrittskörpers ca. 50 kg, wobei der Wiedereintrittskörper für einen Nutzlastrücktransport von ca. 50 kg ausgelegt ist. Der Durchmesser des kapselförmigen schirmartigen Hitzeschildes beträgt etwa 3,5 m, um in Meereshöhe eine Sinkgeschwindigkeit von ca. 10 m/s zu erreichen. Für den Überschallbereich ergibt sich danach ein ballistischer Faktor B von etwa 1,5 bis 3,5 kg/m².

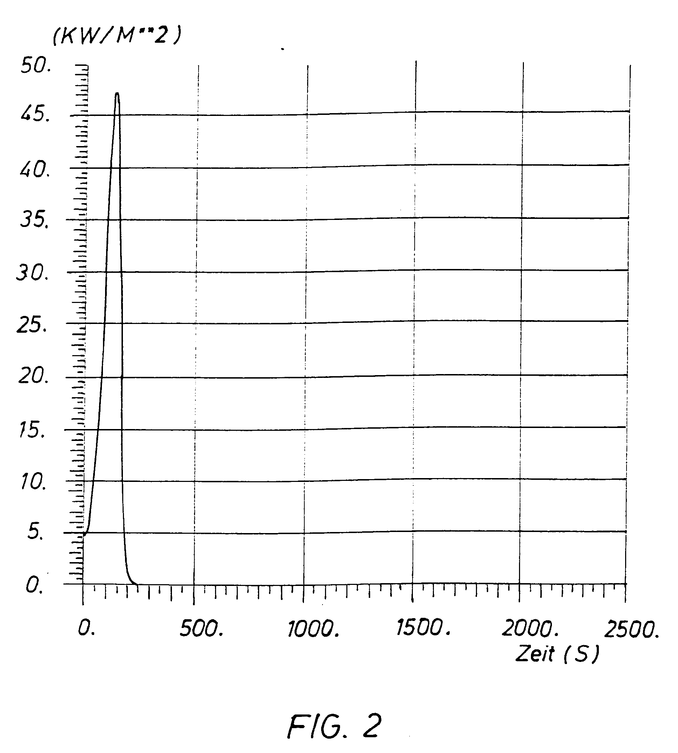

Durch den sehr niedrigen ballistischen Faktor B wird die thermische Belastung des Hitzeschildes stark reduziert, wie aus der Darstellung von Fig. 2 zu entnehmen ist. Fig. 2 zeigt den Verlauf des Wärmeflusses bei der Zeit im Staupunkt (Nährung) für die in Fig. 1 dargestellte Kapsel mit einer Masse von 50 kg, einem Widerstandsbeiwert von 1,5, und einer Querschnittsfläche von 9,62 m². Für die thermische Belastung des Hitzeschildes läßt sich eine Reduzierung der Temperaturen von ca. 1600 °C auf weniger als 700 °C erreichen.

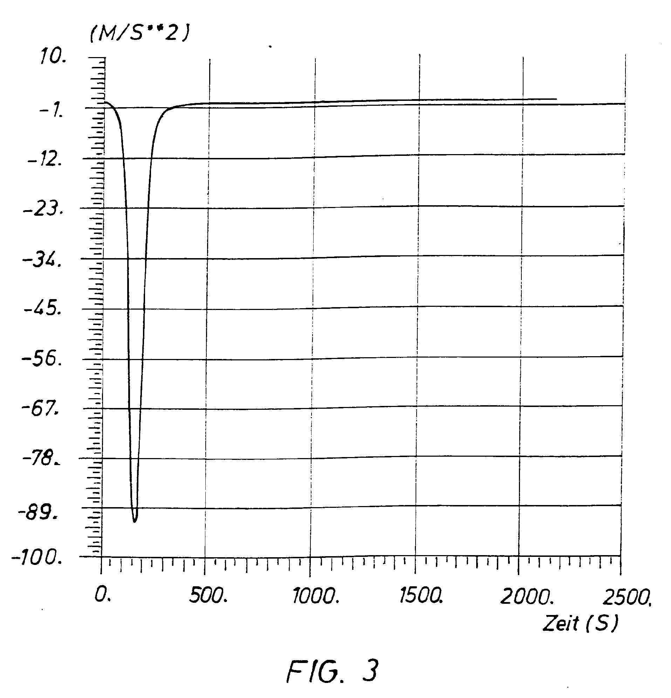

Fig. 3 zeigt eine Darstellung der aerodynamischen Abbremsung der in Fig. 1 dargestellten Vorrichtung mit dem zuvor erwähnten niedrigen ballistischen Faktor B. Bedingt durch den großen Hitzeschild wird die Vorrichtung in den tieferen Schichten der Lufthülle noch deutlich verlangsamt, wobei in Meereshöhe eine stabile Sinkgeschwindigkeit von ca. 10 m/s erreicht wird, wie bei Kapseln mit herkömmlichen Fallschirmen üblich.

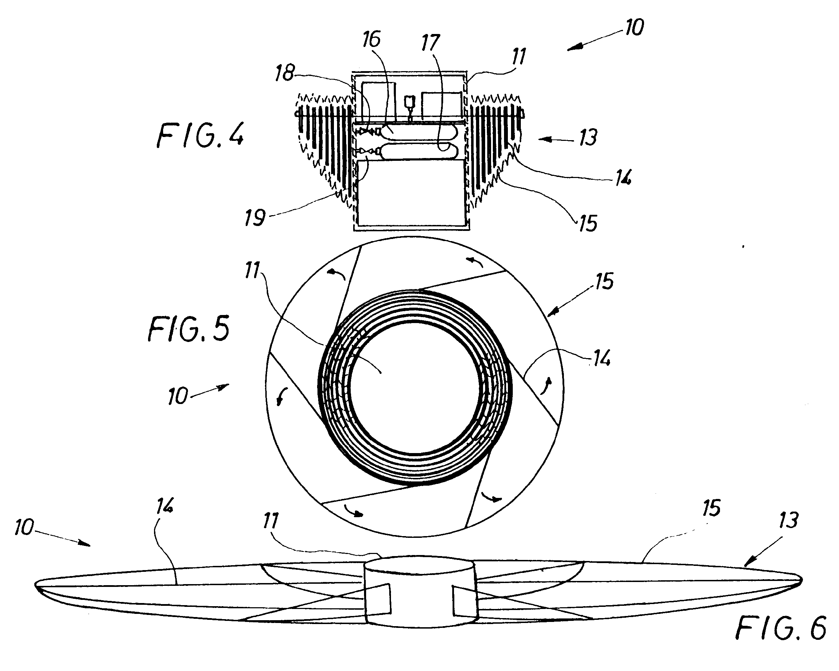

Fig. 4 zeigt eine bevorzugte Ausgestaltung einer Vorrichtung 10 mit einem unaufgefalteten Hitzeschild 13, das aus elastischen Verstärkungselementen bzw. Stringern 14 und einer Folienhohlform 15 besteht und um einen zentralen Abschnitt des Wiedereintrittskörpers 11 gewickelt ist. In dem Inneren des Wiedereintrittskörpers 11 sind eine Druckflasche 16 mit Treibgas und eine Druckflasche 17 mit Schaum angeordnet, die über Ventile 18,19 mit dem Inneren der Folienhohlform 15 verbunden sind. Bei der Entfaltung gehen die Stringer 14 von allein in die gewünschte Stellung.

Fig. 5 zeigt die erste Phase der Entfaltungssequenz, wobei die Bewegungsrichtung der Stringer 14 beim Entfalten mit Pfeilen dargestellt ist.

Die Stringer 14 sind untereinander in nicht dargestellter Weise mit Fasergewebe (Kohle-/Gas-Faser etc.) verbunden. Beim Ausschäumen entsteht ein Faserverbundwerkstoff, der zusätzlich durch die Stringer 14 verstärkt ist, so daß mit der die vorgesehene Form des Hitzeschildes 13 bildenden Folienhohlform 15 ein stabiler großflächiger leichtgewichtiger kapselförmiger Hitzeschild hergestellt wird, wie perspektivisch in Fig. 6 gezeigt.

Verwendbare faserverstärkte Kunststoffe für die erfindungsgemäße Vorrichtung 10 brauchen nur geringen thermischen und mechanischen Anforderungen zu genügen, da aufgrund der erfindungsgemäßen Ausbildung der Vorrichtung nur verhältnismäßig niedrige Temperaturen auftreten und die aerodynamischen Kräfte direkt auf das schwerste Teil der einen Flugkörper bildenden Vorrichtung wirken, nämlich den Hitzeschild. Demzufolge treten nur kleine Biege-Momente auf. Bei einer Dichte des Hitzeschildes von ca. 0,5 g/cm³ und einer Dicke von ca. 0,5 cm ist ein Gewicht von ca. 24 kg für den Hitzeschild realisierbar.

Für den Wiedereintritt der Vorrichtung ist im Transschall-bzw. Unterschallbereich zur Verbesserung der dynamischen Stabilität vorgesehen, daß der Hitzeschild 13 nicht dargestellte Rotation erzeugende aerodynamische Elemente aufweist, die aus Klappen am äußeren Rand des Hitzeschildes 13 oder bevorzugt aus in den Hitzeschild 13 eingearbeiteten Formen bestehen.

Die erfindungsgemäße Ausbildung der Vorrichtung läßt in vorteilhafter Weise für die Landung einen wesentlich geringeren Lande-Shock als konventionelle Kapseln erwarten, da hier der Hitzeschild auf dem Boden aufschlägt und für einen ausgeprägten "Bodeneffekt" sorgt, der den Wiedereintrittskörper 11 abbremst und dadurch Stöße produziert. Dieser "Bodeneffekt" ist dadurch begründet, daß der Abstand zwischen dem Hitzeschild und dem Erdboden kurz vor dem Aufschlagen geringer ist als der Durchmesser des Hitzeschildes. In nicht dargestellter Weise kann weiterhin der Hitzeschild zusätzlich als Shock-Absorber ausgebildet sein.

## Patentansprüche

1. Vorrichtung für den Rücktransport von kleinen Nutzlasten aus dem Orbit, die im wesentlichen als ein passiver Wiedereintrittskörper ausgebildet ist, der eine Fallbremseinrichtung aufweist, die aus einem kompakten raumarmen Zustand in eine großflächige leichtaewichtiae Kapselform mit einem niedrigen ballistischen Faktor (B) bringbar ist, wobei die Fallbremseinrichtung (12) als ein Hitzeschutz ausgebildet ist, dadurch gekennzeichnet, daß die Form des Hitzeschildes (13) durch Entfaltung herstellbar ist, daß für die Herstellung der Form des Hitzeschildes (13) eine gefaltete Folienhohlform (15) vorgesehen ist, die durch Ausschäumen zum fertigen Hitzeschild entfaltbar und stabil aushärtbar ist, daß die Folienhohlform (15) zur Festigkeitserhöhung auf der Innenseite durch Ausschäumen eine faserverbundwerkstoffbildende Faser aufweist und daß für das Entfalten der Form des Hitzeschildes (13) elastische Verstärkungselemente (14) vorgesehen sind, die vor dem Entfalten um einen zentralen Abschnitt des Wiedereintrittskörpers (11) gewickelt sind und beim Entfalten eine stabil ausschäumbare Folienhohlform (15) aufspannen.

2. Vorrichtung nach Anspruch 1, dadurch gekennzeichnet, daß die Größe des Hitzeschilddurchmessers (D) auf die Erzielung einer Sinkgeschwindigkeit in Meereshöhe von ca. 10 m/s abgestimmt ist.

3. Vorrichtung nach Anspruch 1 oder 2, dadurch gekennzeichnet , daß der Hitzeschild mit einer selbstentfaltenden Gedächtnis-Legierung gebildet ist.

4. Vorrichtung nach einem der Ansprüch 1 bis 3, dadurch gekennzeichnet, daß die elastischen Verstärkungselemente (14) untereinander mit einem Fasergewebe verbunden sind, das beim Ausschäumen einen durch die Verstärkungselemente (14) versteiften Faserverbundwerkstoff bildet.

5. Vorrichtung nach einem der vorangehenden Ansprüche, dadurch gekennzeichnet, daß der Hitzeschild (13) zur Verbesserung der dynamischen Stabilität im Unterschall- und Transschallbereich Rotation erzeugende aerodynamische Elemente aufweist.

6. Vorrichtung nach Anspruch 5, dadurch gekennzeichnet, daß als aerodynamische Elemente Klappen am äußeren Rand des Hitzeschildes (13) vorgesehen sind.

7. Vorrichtung nach Anspruch 5, dadurch gekennzeichnet, daß als aerodynamische Elemente in den Hitzeschild (13) eingearbeitete Formen vorgesehen sind.

## Claims

1. Apparatus for the return transport of small payloads from orbit, said apparatus being configured essentially as a passive re-entry body that has a descent retardation device which, from a compact low-volume condition, can be brought into the form of a large-area lightweight capsule with a low ballistic factor (B), said descent retardation device (12) being designed as a thermal protection means, characterized in that the shape of the heat shield (13) can be produced by unfolding, in that a folded, hollow, sheeting member (15) is provided for producing the shape of the heat shield (13), said member being unfoldable to produce the finished heat shield as a result of foam-filling, and being hardenable to become stable, in that the hollow sheeting member (15) has a fibre on the inside in order to increase the strength, said fibre forming a fibrous composite material as a result of foam-filling, and in that resilient reinforcing elements (14) are provided for developing the shape of the heat shield (13), said reinforcing elements, prior to deployment, being wound around a central portion of the re-entry body (11) and, on deployment, stretching a hollow sheeting member (15) which can be foam-filled so as to become stable.

2. Apparatus according to Claim 1, characterized in that the magnitude of the heat-shield diameter (D) is selected in order to achieve a rate of descent of approximately 10 m/s at sea level.

3. Apparatus according to Claim 1 or 2, characterized in that the heat shield is formed by a self-unfolding memory alloy.

4. Apparatus according to any one of Claims 1 to 3, characterized in that the resilient reinforcing elements (14) are interconnected by a fibrous tissue which forms a fibrous composite material, stiffened by the reinforcing elements (14), when foam-filling takes place.

5. Apparatus according to any one of the preceding Claims, characterized in that the heat shield (13) has rotation-generating aerodynamic elements in order to improve the dynamic stability in the subsonic and transonic regions.

6. Apparatus according to Claim 5, characterized in that flaps, serving as aerodynamic elements, are provided on the outer edge of the heat shield (13).

7. Apparatus according to Claim 5, characterized in that shapes, serving as aerodynamic elements, are provided by being recessed into the heat shield (13).

## Revendications

1. Dispositif pour le transport de retour de petites masses satellisées à partir de l'orbite, dispositif qui est essentiellement constitué comme un corps passif de rentrée, qui présente un système de freinage de la chute qui peut être mis à partir d'un état compact peu encombrant sous la forme d'une capsule de faible poids et de grande surface avec un bas facteur ballistique (B), dispositif dans lequel le système de freinage de la chute (12) est constitué comme une protection thermique, dispositif caractérisé en ce que la forme du bouclier thermique (13) peut être réalisée par déploiement, en ce que pour la réalisation de la forme du bouclier thermique (13) il est prévu d'avoir une forme creuse pliée à lamelles (15), qui peut se déployer en moussant pour donner le bouclier thermique prêt à fonctionner et qui peut être raidie de façon stable, en ce que la forme creuse à lamelles (15) présente, pour augmenter la résistance sur le côté intérieur par moussage, des fibres formant une matière composite à base de fibres et en ce que pour le déploiement de la forme du bouclier thermique (13), il est prévu des éléments élastiques de renforcement (14), qui sont enroulés, avant le déploiement autour d'une section centrale du corps de rentrée (11) et serrent lors du déploiement une forme creuse (15) à lamelles pouvant mousser de façon stable.

2. Dispositif selon la revendication 1, caractérisé en ce que la grandeur du diamètre du bouclier thermique (D) est adaptée à l'obtention d'une vitesse de descente verticale en altitude d'environ 10 m/s.

3. Dispositif selon la revendication 1 ou 2, caractérisé en ce que le bouclier thermique est formé d'un alliage à mémoire s'autodéployant.

4. Dispositif selon l'une des revendications 1 à 3, caractérisé en ce que les éléments élastiques de renforcement (14) sont reliés entre eux par un tissu fibreux, qui forme lors du moussage une matière composite fibreuse raidie par les éléments de renforcement (14).

5. Dispositif selon l'une des revendications précédentes, caractérisé en ce que le bouclier thermique (13), pour améliorer la stabilité dynamique dans la zone subsonique et la zone transsonique, présente des éléments aérodynamiques produisant une rotation.

6. Dispositif selon la revendication 5, caractérisé en ce que l'on prévoit comme éléments aérodynamiques des volets sur le bord extérieur du bouclier thermique (13).

7. Dispositif selon la revendication 5, caractérisé en ce que l'on prévoit comme éléments aérodynamiques des formes incorporées dans le bouclier thermique (13).
